# EUROPEAN PATENT APPLICATION

(11) **EP 2 320 360 A1**
(43) Date of publication of application: **11.05.2011**
(21) Application number: 09175427.5
(22) Date of filing: 09.11.2009
(51) Int. Cl.: G06Q 10/00

(54) **Guidance method for identifying a component of a complex product or system**

(71) Applicant: Aman, Lars, 181 65 Lidingö (SE); Aman, Anders, 114 56 Stockholm (SE)
(72) Inventor: Aman, Lars, 181 65 Lidingö (SE); Aman, Anders, 114 56 Stockholm (SE)
(74) Representative: Bergentall, Annika Maria

(57) **Abstract**

Method that in a complex product or system in co-operation with a client identifies a necessity, such as a detail or a spare part in a commercially available store or stock storage of an arbitrary branch, in order to provide guidance and replacement parts. The invention comprise that any combination of a verbal or figurative overview is presented to a user of the method at an overarching structural level from which the user interactively makes a choice based on memorisable facts, to a next, less over-arching structural level, in at least two steps, until at a level corresponding to a detail level (target level) at which an item sought for is found, a choise is made based on facts corresponding to the memorisable facts carried along and displayed on the actual detail level (target level).

## Description

### Field of the invention

The present invention relates to a method for anyone in identifying a necessity for a complex product or system such as a detail or a spare part, commercially available in a store or stock storage of an arbitrary branch, such as a spare part for a lawn mover with a specified origin and/or detail number.

### Background

When people are faced with finding the correct component for solving a constructional problem or a dysfunction of some kind in a more or less complex device or construction, a detail or a spare part must be localized. Since good craftsmen nowadays either has become too expensive or too hard to find, there is a tendency in people to try to solve a lot more things on their own than traditionally was the case. As a consequence different kinds of stores have been established in trying to provide such details or spare parts to the more or less knowledgeless layman. Providing this can be quite complex and do require quite some knowledge, empathy, patience and understanding from employees trying to understand what is requested, dependent on which branch one focuses on. All these necessary personal characteristics can be learned, however, it costs money to provide education. Also people that normally accept working with helping said laymen in finding what they search for, tend to be young people that accept jobs of this kind for shorter times of their lives, such as before starting their major education. This means that there is a more or less constant demand on renewal of such staff and also a constant demand on education of new people before being able to serve as shop attendants or the like in serving clients to buy the correct eg. spare part. In spite of the fact that the attendants gets educated it is still always the respective attendants' appearance and actual knowledge that determine whether the client or customer assimilate the correct advice or not and gets to buy the correct spare part. All of this is of course unsatisfactory and it is therefore the purpose of the present invention to define a method by which it is no longer necessary to use human attendants to guide people to the correct buy in each specific situation.

### Summary of the Invention

A primary objective of the present invention to provide a method which gives a client the possibility to, when in a situation trying to find a solution to a specific decisive situation, before buying something that rectifies the situation, gives the correct support in making the correct decision at each specific client's own intellectual level.

According to the invention any combination of a verbal or figurative overview is presented at an overarching structural level from which a choice based on memorisable facts is made to a next, less over-arching structural level, in at least two steps, until at a level corresponding to a detail level at which an item sought for is found, a choise is made based on facts displayed on the actual detail level (target level).

For a client it will thereby be possible to in an iterative fashion step-by-step advance towards a desirable result without need for any person-to person guidance or assistance. By the fact that all symbols used in the presentation or guidance are generated using a cognitive ergonomic method, it will be possible to guide almost anyone with normal intelligence towards said desirable result.

The invention moreover according to a secondary objective makes it possible to at said target level, to a client extract and supply instructive pictorials or film sequences such as disassembly instructions, assembly instructions and instructions for use in order to provide added value to the client.

Furthermore, to the organisation that implements a method according to the invention, it will be able to provide an extra "salesperson" for each presentational interface that is exposed. Said "sales person" as such will never get ill, never take a holiday and will never take a break. According to a further developed embodiment of the invention the client may at said target level be able to extract and be supplied with either instructive pictorials, with or without lingual descriptions, film sequences such as disassembly, assembly instructions and instructions for use. This embodiment will no doubt further increase the joy of the layman when he or she discovers that it with proper guidance is possible to achieve things that before seemed more or less impossible to.

Such pictorials or film sequences may be provided as hard-ware or as soft-ware via e-mail or blue-tooth communication with for instance a mobile telephone or a personal computer.

In its present appearance the present invention provides inevitable sales support to complex products, the access to which can be invaluable both to the sales organisation and to the client.

By furthermore using computerized guidance interfaces it is possible for the sales organization to expand its sales area even to selling goods in stock. For travelling sales persons it gives immediate control of availability and possible deliveries due to contact over the Internet. When the invention is completely computerized, it teaches the sales organisation more about its customers by the possibility to collect and store information about clients as well as purchased items and handle such information for the good of developing the product mix or range It will also be possible to activate promotional offers directly as well as to create individual offers.

Finally it will be an aid in gathering different kinds of help and safety regulations.

### Brief description of the drawings

The invention will in the following be described more in detail by reference to a preferred embodiment shown on the enclosed drawings, in which:
Fig 1 shows a flow diagram over a generic method for anyone to identify a necessity for a complex product or system,
Fig 2 shows as a front view a visualisation over an access station to be used in exercising the method according to the invention, and

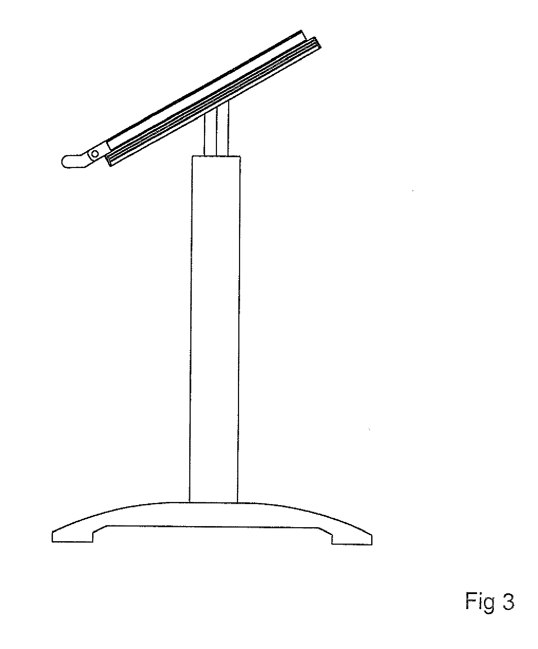

Fig 3 shows said access station as a side view from its left side.

### Detailled description of the invention

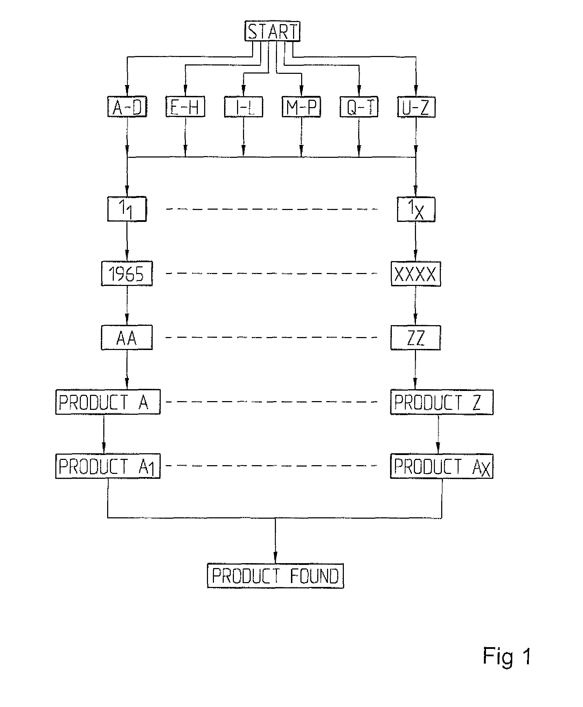

According to fig 1, a generic flow diagram is shown for realizing a method according to the invention. At an uppermost level thereof at "start", an entrance (1) to a more and more refined maze (2) is defined. Said entrance (1) may be in the form of a refined catalogue system comprising cross-references to other parts of said entrance catalogue or to another catalogue, which in its turn may define a lower more detailed level of cross-references to other parts of the catalogue system or perhaps shows an article sought for in a product mix, which is specific for a certain branch or business operation. While iterating oneself along the way down said maze (2), it is essential that the person performing the search is aware of that certain "inputs" are given in the form of intelligent part-taking in decision making in order to be able to proceed further towards the goal, which is to find a certain article, pertaining to the branch in question, sought for, such as a spare part for an automobile. A most essential part of the iterative process in reaching said goal is that it is supposed that the process is supposed to proceed in spite of the fact that the person using the same is unable to receive any kind of help in reaching the goal, in other words, the iterative process must be provided with directional advice contained in connection with each step that is more than good enough to make the person able to in a decisive fashion take a stand.

From the entrance at (1) marked "start", different paths such as A-D, E-H, I-L etc are electable based on information provided by the user of the method. Each such path, for instance A-D, in succession gives a number of possible choices 1₁ to 1ₓ, which after being elected gives free pass to another level of choices 1965 to 20XX, and so on until the correct component or subcomponent is found and if the method is software implemented where the same is stored.

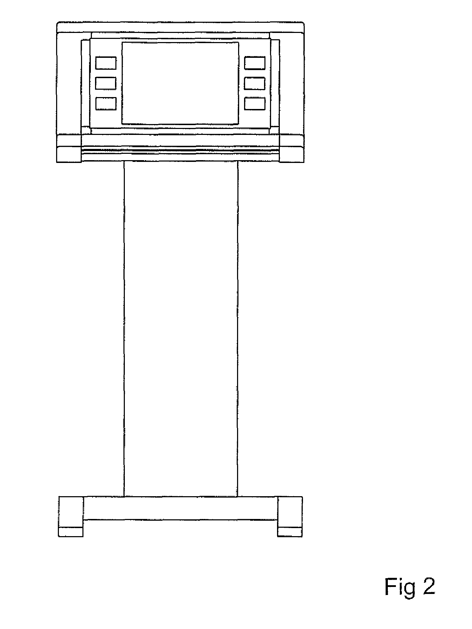

As is shown in fig 2, the method of the invention may very well be exercised in the form of a software-system implemented to be used with the aid of an easily handled touch sensitive computer-screen, which in turn might be part of a more complex computer architecture, part of which in turn can be for example an advanced ERP-system (Enterprise Resource Planning system). By being connected in such a system, the client can always get advice with regard to availability, if not immediate. The possibilities to provide helping instructions is by implementation of the method via software largely enhanced.

Method according to anyone of the preceeding claims, in which said presentation is made making use of software installed in a personal computer or a computer server connected to work-stations.

The computer or computer-server may be integratedly combined with a bar code reader (not shown), either stationary or mobile, so that a client may pick an item from anywhere such as a shelf in a store to by using said reader have the items bar code decoded in order to verify the items compatibility with the product for which relief is sought.

Furthermore the method according to the invention may be provided as a combination of at least one search facility like a catalogue with, when the correct spare part is found, the delivery of one or more hardware spare parts or details together with USB-memories or software based instructions provided for instance via a Bluetooth interface containing said software based information, to be displayed in a computer or on a cell phone, that upon activation displays all necessary information and steps needed for mounting or replacing said spare part or detail.

The invention is not considered limited to only the above generically described examples but should instead be limited only by the enclosed claims.

## Claims

1. Method to identify a necessity in a complex product or system such as a detail or a spare part in a commercially available store or stock storage of an arbitrary branch, comprising that any combination of a verbal or figurative overview is presented to a user of the method at an overarching structural level from which the user interactively makes a choice based on memorisable facts to a next, less over-arching structural level, in at least two steps, until at a level corresponding to a detail level (target level) at which an item sought for is found, a choise is made based on facts corresponding to the memorisable facts carried along and displayed on the actual detail level (target level).

2. Method according to claim 1, comprising at said target level to extract and supply to a client of either instructive pictorials with or without lingual descriptions or film sequences such as disassembly, assembly instructions and instructions for use.

3. Method according to claim 2, comprising combining supply of physical items such as at least one search facility like a catalogue with the delivery of hardware spare parts or details together with USB-memories containing software based information, to be displayed in a computer, that upon activation displays all necessary information and steps needed for mounting or replacing said spare part or detail.

4. Method according to claim 2, comprising combining supply of physical items such as at least one search facility like a catalogue with the delivery of hardware spare parts or details together with software based information via Bluetooth to for instance a cell phone, that upon activation displays all necessary information and steps needed for mounting or replacing said spare part or detail.

5. Method according to anyone of the preceeding claims, in which said presentation is made making use of software installed in a personal computer or a computer server connected to work-stations.

6. Method according to claim 5, comprising that the computer or computer-server is integratedly combined with a bar code reader so that a client may pick an item from anywhere such as a shelf in a store to by using said reader have the items bar code decoded in order to verify the items compatibility sought for.

7. Method according to anyone of claims 5 or 6, comprising that it is realized using a Touch-screen connected to said computer or computer network.
